# EUROPÄISCHE PATENTSCHRIFT

(11) **EP 3 263 382 B1**
(45) Veröffentlichungstag und Bekanntmachung des Hinweises auf die Patenterteilung: **05.08.2020**
(21) Anmeldenummer: 17171681.4
(22) Anmeldetag: 18.05.2017
(51) Int. Cl.: B60K 6/48, B60W 10/02, B60W 10/06, B60W 20/00, B60W 20/40, F16D 48/06

(54) **VERFAHREN ZUM BETREIBEN EINER ANTRIEBSEINRICHTUNG SOWIE ENTSPRECHENDE ANTRIEBSEINRICHTUNG**
METHOD FOR OPERATING A DRIVE DEVICE AND CORRESPONDING DRIVE DEVICE
PROCÉDÉ D'ENTRAÎNEMENT D'UN DISPOSITIF D'ENTRAÎNEMENT ET DISPOSITIF D'ENTRAÎNEMENT CORRESPONDANT

(30) Priorität: 07.06.2016 DE 102016006976
(43) Veröffentlichungstag der Anmeldung: 03.01.2018
(73) Patentinhaber: AUDI AG, 85045 Ingolstadt (DE)
(72) Erfinder: Brusberg, Alexander, 86669 Königsmoos (DE)

(56) Entgegenhaltungen:
- EP-A1- 2 008 899
- EP-A2- 1 201 479
- EP-A2- 1 574 378
- DE-A1-102008 004 366
- DE-A1-102012 210 871
- US-A1- 2011 246 008

## Beschreibung

Die Erfindung betrifft ein Verfahren zum Betreiben einer Antriebseinrichtung, die eine Brennkraftmaschine und eine elektrische Maschine aufweist, wobei eine Ausgangswelle der Antriebseinrichtung mit der Brennkraftmaschine über eine Schaltkupplung wirkverbindbar und mit der elektrischen Maschine permanent wirkverbunden ist, sodass die Ausgangswelle in einem ersten Schaltzustand der Schaltkupplung von der Brennkraftmaschine entkoppelt und in einem zweiten Schaltzustand mit ihr gekoppelt ist. Die Erfindung betrifft weiterhin eine Antriebseinrichtung.

Die Antriebseinrichtung dient beispielsweise dem Antreiben eines Kraftfahrzeugs, insoweit also dem Bereitstellen eines auf das Antreiben des Kraftfahrzeugs gerichteten Drehmoments. Die Antriebseinrichtung verfügt über mehrere Antriebsaggregate, nämlich ein als Brennkraftmaschine ausgeschaltetes erstes Antriebsaggregat und ein als elektrische Maschine ausgebildetes zweites Antriebsaggregat. Die Antriebseinrichtung liegt insoweit als Hybridantriebseinrichtung vor. Die Antriebseinrichtung verfügt über die Ausgangswelle, an welche beispielsweise ein Mehrganggetriebe, insbesondere eine Getriebeeingangswelle des Mehrganggetriebes, angeschlossen ist. Bevorzugt ist das Mehrganggetriebe beziehungsweise die Getriebeeingangswelle starr und/oder permanent mit der Ausgangswelle gekoppelt. Es kann jedoch auch vorgesehen sein, dass zwischen der Ausgangswelle und der Getriebeeingangswelle beziehungsweise dem Mehrganggetriebe eine weitere Kupplung, insbesondere eine Schaltkupplung, ein Drehmomentwandler oder dergleichen, vorliegt.

Die Ausgangswelle ist mit der elektrischen Maschine permanent wirkverbunden. Beispielsweise ist die elektrische Maschine koaxial zu der Ausgangswelle angeordnet, insbesondere ist die Ausgangswelle unmittelbar mit einem Rotor der elektrischen Maschine verbunden. Bevorzugt sitzt der Rotor auf der Ausgangswelle. Auch andere Anordnungen der elektrischen Maschine können jedoch vorgesehen sein. Zwischen der Brennkraftmaschine und der Ausgangswelle liegt die Schaltkupplung vor. Entsprechend ist die Brennkraftmaschine über die Schaltkupplung mit der Ausgangswelle wirkverbindbar, wobei die Brennkraftmaschine in dem ersten Schaltzustand der Schaltkupplung von der Ausgangswelle entkoppelt und in dem zweiten Schaltzustand mit ihr gekoppelt ist. In dem zweiten Schaltzustand ist vorzugsweise eine schlupffreie Verbindung zwischen der Brennkraftmaschine und der Ausgangswelle hergestellt, also ohne Kupplungsschlupf der Schaltkupplung.

Das Dokument EP 2 008 899 A1 beschreibt ein Verfahren zur Reibwertadaption einer in einem Hybridantriebsstrang zwischen einer Elektromaschine und einem Verbrennungsmotor angeordneten, von einem Kupplungsaktor betätigten Reibungskupplung. Der Reibwert wird mittels eines von der Reibungskupplung übertragenen Moments adaptiert, das bei einem Anlassen des Verbrennungsmotors mittels der Elektromaschine ermittelt wird.

Es ist Aufgabe der Erfindung, ein Verfahren zum Betreiben einer Antriebseinrichtung vorzuschlagen, welches gegenüber bekannten Verfahren Vorteile aufweist, insbesondere ein zuverlässiges und komfortables Starten der Brennkraftmaschine mittels eines über die Ausgangswelle bereitgestellten Drehmoments, insbesondere eines von der elektrischen Maschine bereitgestellten Drehmoments, ermöglicht.

Dies wird erfindungsgemäß mit einem Verfahren mit den Merkmalen des Anspruchs 1 erreicht. Dabei ist vorgesehen, dass während eines Startens der Brennkraftmaschine aus dem Stillstand in einer Adaptionsbetriebsart eine Kupplungsadaption vorgenommen wird, wobei an der Schaltkupplung ein Sollkupplungsdrehmoment derart eingestellt wird, dass Kupplungsschlupf vorliegt, und die Brennkraftmaschine unbefeuert auf eine erste Solldrehzahl und anschließend unbefeuert mit konstantem Sollkupplungsdrehmoment auf eine zweite Solldrehzahl geschleppt wird, und wobei nach der Kupplungsadaption die Schaltkupplung vollständig geöffnet und die Brennkraftmaschine befeuert auf eine Synchrondrehzahl gefahren wird, die der Drehzahl der Ausgangswelle entspricht.

In der Adaptionsbetriebsart ist es also vorgesehen, während des Startens der Brennkraftmaschine diese nicht nur auf die Synchrondrehzahl zu bringen, sondern gleichzeitig die Kupplungsadaption vorzunehmen. Im Rahmen der Kupplungsadaption wird ein Kupplungskennfeld der Schaltkupplung aktualisiert. Das Kupplungskennfeld setzt das von der Schaltkupplung übertragene Drehmoment in Relation zu einer Stellgröße der Schaltkupplung, wobei als Stellgröße beispielsweise ein Anpressdruck verwendet wird, insbesondere falls die Schaltkupplung als Lamellenkupplung ausgebildet ist. Das Kupplungskennfeld weist insoweit das Sollkupplungsdrehmoment als Eingangsgröße und die Stellgröße als Ausgangsgröße auf. Bei dem Einstellen des Sollkupplungsdrehmoments an der Schaltkupplung wird entsprechend anhand des Kupplungskennfelds der dem Sollkupplungsdrehmoment entsprechende Wert der Stellgröße ermittelt und die Schaltkupplung entsprechend betrieben. Das Einstellen des Sollkupplungsdrehmoments an der Schaltkupplung hat insoweit das Betreiben der Schaltkupplung mit der anhand des Sollkupplungsdrehmoments aus dem Kupplungskennfeld ermittelten Stellgröße zur Folge.

Beispielsweise aufgrund einer Alterung und/oder Abnutzung der Schaltkupplung und/oder veränderten Umgebungsbedingungen kann es zu einer Abweichung zwischen dem Sollkupplungsdrehmoment und dem tatsächlich über die Schaltkupplung übertragenen Istkupplungsdrehmoment kommen, wenn anhand des Kupplungskennfelds die Stellgröße aus dem Sollkupplungsdrehmoment ermittelt und zum Betreiben der Schaltkupplung herangezogen wird. Aus diesem Grund ist es von Zeit zu Zeit notwendig, die Kupplungsadaption vorzunehmen, um das Kupplungskennfeld anzupassen, sodass nachfolgend idealerweise das tatsächlich über die Schaltkupplung übertragene Istkupplungsdrehmoment dem an ihr eingestellten Sollkupplungsdrehmoment entspricht.

Die Kupplungsadaption wird während des Startens der Brennkraftmaschine durchgeführt, wenn die Antriebseinrichtung in der Adaptionsbetriebsart betrieben wird. Während des Startens ist es vorgesehen, an der Schaltkupplung zunächst das Sollkupplungsdrehmoment einzustellen, wobei dieses derart gewählt wird, dass Kupplungsschlupf der Schaltkupplung vorliegt. Die Schaltkupplung ist mithin nicht vollständig geschlossen, sodass die Brennkraftmaschine nicht starr mit der Ausgangswelle gekoppelt ist. Anschließend wird die Brennkraftmaschine über die Schaltkupplung, also mittels des über die Schaltkupplung übertragenden Istkupplungsdrehmoments, auf die erste Solldrehzahl geschleppt.

Ist die erste Solldrehzahl erreicht, wird die Brennkraftmaschine anschließend ebenfalls unbefeuert auf die zweite Solldrehzahl geschleppt, wobei das Sollkupplungsdrehmoment konstant gehalten wird. Die zweite Solldrehzahl entspricht beispielsweise einer minimalen Drehzahl der Brennkraftmaschine, ab welcher diese ohne externes Drehmoment, also allein aufgrund ihres befeuerten Betriebs, weiter beschleunigt werden kann, nämlich in Richtung der Synchrondrehzahl. Bei konstantem Sollkupplungsdrehmoment ergibt sich idealerweise ein Drehzahlverlauf der Istdrehzahl der Brennkraftmaschine mit einem konstanten Anstieg der Istdrehzahl. Zum Konstanthalten des Sollkupplungsdrehmoments zwischen der ersten Solldrehzahl und der zweiten Solldrehzahl wird vorzugsweise die Stellgröße der Schaltkupplung konstant gehalten oder zum Erzielen des konstanten Sollkupplungsdrehmoments eingestellt.

Die eigentliche Kupplungsadaption wird vorgenommen, wenn die Istdrehzahl der Brennkraftmaschine zwischen der ersten Solldrehzahl und der zweiten Solldrehzahl liegt, insbesondere über den gesamten Drehzahlbereich hinweg, der von der ersten Solldrehzahl einerseits und von der zweiten Solldrehzahl andererseits begrenzt wird. Aufgrund des unbefeuerten Betreibens der Brennkraftmaschine bis hin zu der zweiten Solldrehzahl steht für die Kupplungsadaption ein ausreichend langer Zeitraum zur Verfügung.

Nach der Kupplungsadaption, also ab dem Erreichen der zweiten Solldrehzahl, wird die Schaltkupplung vollständig geöffnet. Anschließend wird die Brennkraftmaschine befeuert auf die Synchrondrehzahl gefahren, die der Istdrehzahl der Ausgangswelle entspricht. Anschließend kann die Schaltkupplung erneut geschlossen werden, insbesondere in den zweiten Schaltzustand gebracht werden, in welcher sie vollständig geschlossen ist, sodass eine feste Kopplung zwischen der Ausgangswelle und der Brennkraftmaschine vorliegt. Aufgrund des Öffnens der Schaltkupplung und dem befeuerten Betreiben der Brennkraftmaschine wird trotz dem Durchführen der Kupplungsadaption ein äußerst rasches Starten der Brennkraftmaschine erzielt.

Eine weitere Ausgestaltung der Erfindung sieht vor, dass bei der Kupplungsadaption aus einem Drehzahlgradient der Brennkraftmaschine ein Istkupplungsdrehmoment ermittelt und mit dem Sollkupplungsdrehmoment verglichen wird, wobei bei einer Abweichung zwischen dem Istkupplungsdrehmoment und dem Sollkupplungsdrehmoment eine Adaption eines Kupplungskennfelds der Schaltkupplung vorgenommen wird. Vorstehend wurde bereits erläutert, welche Bedeutung das Kupplungskennfeld hat, nämlich dass dieses dem Umsetzen des Sollkupplungsdrehmoments in eine Stellgröße der Schaltkupplung dient.

Für die Kupplungsadaption ist es nun notwendig, bei an der Stellkupplung eingestelltem Sollkupplungsdrehmoment das tatsächlich von dieser übertragenen Istdrehmoment beziehungsweise die Differenz zwischen dem Istkupplungsdrehmoment und dem Sollkupplungsdrehmoment festzustellen. Zu diesem Zweck wird zumindest der Drehzahlgradient der Brennkraftmaschine herangezogen, also der Drehzahlgradient der Istdrehzahl der Brennkraftmaschine über der Zeit. Auch weitere Größen können in das Istkupplungsdrehmoment einfließen, insbesondere ein Trägheitsmoment der Brennkraftmaschine und/oder ein Reibmoment der Brennkraftmaschine, welches üblicherweise drehzahlabhängig ist.

Wird nun während der Kupplungsadaption festgestellt, dass das Istkupplungsdrehmoment von dem Sollkupplungsdrehmoment abweicht, so wird das Kupplungskennfeld entsprechend angepasst, nämlich derart, dass nachfolgend bei einem Einstellen des Sollkupplungsdrehmoments an der Schaltkupplung das Istkupplungsdrehmoment diesem entspricht. Bevorzugt ist es vorgesehen, während der Kupplungsadaption lediglich genau ein Sollkupplungsdrehmoment an der Schaltkupplung einzustellen. Es kann jedoch auch vorgesehen sein, dass mehrere unterschiedliche Sollkupplungsdrehmomente und mithin mehrere Stellgrößen an der Schaltkupplung eingestellt werden, sodass eine genauere Adaption des Kupplungskennfelds erfolgen kann. In diesem Fall weist bevorzugt der Drehzahlverlauf der Istdrehzahl der Brennkraftmaschine mehrere Teilverläufe auf, wobei jedem Sollkupplungsdrehmoment ein Teilverlauf zugeordnet ist.

Eine Weiterbildung der Erfindung sieht vor, dass vor dem Erreichen der zweiten Solldrehzahl durch die Brennkraftmaschine eine Kraftstoffeinspritzung in die Brennkraftmaschine unterbunden und nach dem Erreichen der zweiten Solldrehzahl freigegeben wird. Vorstehend wurde bereits darauf hingewiesen, dass die Brennkraftmaschine bis zum Erreichen der zweiten Solldrehzahl unbefeuert betrieben beziehungsweise geschleppt werden soll und nach dem Erreichen der zweiten Solldrehzahl ein befeuerter Betrieb der Brennkraftmaschine vorgesehen ist. Dies wird durch das Unterbinden und Freigeben der Kraftstoffeinspritzung in den entsprechenden Drehzahlbereichen erreicht.

Im Rahmen einer bevorzugten Ausführungsform der Erfindung ist vorgesehen, dass ein linearer Drehzahlverlauf zwischen der ersten Solldrehzahl und der zweiten Solldrehzahl zum Bestimmen des Istkupplungsdrehmoments verwendet wird. Auch hierauf wurde vorstehend bereits eingegangen. Selbstverständlich kann es jedoch vorgesehen sein, dass sich der Drehzahlverlauf aus unterschiedlichen Drehzahlteilverläufen zusammensetzt, wobei die Drehzahlteilverläufe jeweils linear sind, jedoch unterschiedliche Drehzahlgradienten aufweisen. Mit einer derartigen Vorgehensweise kann die Adaption des Kupplungskennfelds bei mehreren Sollkupplungsdrehmomenten beziehungsweise Istkupplungsdrehmomenten vorgenommen werden und entsprechend genauer erfolgen.

Erfindungsgemäß ist es vorgesehen, dass die Antriebseinrichtung in einem Normalbetrieb betrieben wird und nur dann in die Adaptionsbetriebsart gewechselt wird, wenn eine bestimmte Anzahl an Kupplungsbetätigungen der Schaltkupplung seit der letzten Kupplungsadaption überschritten ist oder eine Adaptionsanforderung vorliegt, wobei nach dem Starten der Brennkraftmaschine, während welchem die Kupplungsadaption durchgeführt wird, wieder in die Normalbetriebsart gewechselt wird. Es ist also vorgesehen, die Antriebseinrichtung nicht permanent in der Adaptionsbetriebsart zu betreiben. Vielmehr wird lediglich in diese gewechselt, wenn bestimmte Bedingungen erfüllt sind. Ansonsten wird die Antriebseinrichtung in der Normalbetriebsart betrieben. Es kann vorgesehen sein, dass die Kupplungsadaption in der Normalbetriebsart unterbleibt. Es kann jedoch auch vorgesehen sein, dass in der Normalbetriebsart zusätzlich die Kupplungsadaption erfolgt.

Beispielsweise wird in die Adaptionsbetriebsart gewechselt, wenn ein Zähler, welcher die Anzahl an Kupplungsbetätigungen seit der letzten Kupplungsadaption zählt, einen bestimmten Grenzwert überschreitet. Der Zähler wird bei dem Wechseln in die Adaptionsbetriebsart oder nach dem Durchführen der Kupplungsadaption zurückgesetzt, beispielsweise auf null. Es kann jedoch auch vorgesehen sein, in die Adaptionsbetriebsart zu wechseln, wenn während des Startens der Brennkraftmaschine festgestellt wird, dass das Istkupplungsdrehmoment deutlich von dem Sollkupplungsdrehmoment abweicht, beispielsweise weil die Istdrehzahl der Brennkraftmaschine zu schnell oder zu langsam ansteigt, allgemein also von einem anhand des Sollkupplungsdrehmoments erwarteten Drehzahlverlauf abweicht. In diesem Fall wird die Adaptionsanforderung ausgegeben beziehungsweise erzeugt.

Eine weitere bevorzugte Ausführungsform der Erfindung sieht vor, dass das Starten der Brennkraftmaschine in der Normalbetriebsart wahlweise unbefeuert oder befeuert durchgeführt wird, wobei anhand wenigstens eines Zustandsparameters das unbefeuerte oder befeuerte Starten ausgewählt wird. Grundsätzlich ist die Antriebseinrichtung also derart ausgestaltet, dass sowohl das unbefeuerte als auch das befeuerte Starten der Brennkraftmaschine erfolgen kann. Aus diesen unterschiedlichen Startbetriebsarten wird anhand des Zustandsparameters ausgewählt. Der Zustandsparameter dient insoweit dazu, zu entscheiden, ob nachfolgend das Starten der Brennkraftmaschine entweder unbefeuert oder befeuert durchgeführt werden soll.

Als Zustandsparameter wird beispielsweise eine Vorgabedrehzahl und/oder ein Vorgabedrehmoment herangezogen, welche/welches an der Antriebseinrichtung eingestellt wird. Die Vorgabedrehzahl und/oder das Vorgabedrehmoment werden beispielsweise durch einen Fahrer des Kraftfahrzeugs mittels einer entsprechenden Bedieneinrichtung oder durch eine Fahrerassistenzeinrichtung des Kraftfahrzeugs festgelegt.

Die Erfindung sieht in einer weiteren Ausgestaltung vor, dass die Brennkraftmaschine in der Normalbetriebsart zum unbefeuerten Starten über die Schaltkupplung unbefeuert bis auf die Synchrondrehzahl geschleppt und erst anschließend die Kraftstoffeinspritzung freigegeben wird. Wird die Antriebseinrichtung also in der Normalbetriebsart betrieben und soll die Brennkraftmaschine gestartet werden, insbesondere aus dem Stillstand, so wird diese durch zumindest teilweises Schließen der Schaltkupplung unbefeuert bis auf die Synchrondrehzahl geschleppt. Hierzu wird die Schaltkupplung wiederum bevorzugt derart eingestellt, dass Kupplungsschlupf vorliegt.

Wenn die Brennkraftmaschine die Synchrondrehzahl erreicht hat, wird die Kraftstoffeinspritzung freigegeben, also ein befeuerter Betrieb der Brennkraftmaschine vorgenommen. Zudem wird bei dem Erreichen der Synchrondrehzahl die Schaltkupplung vorzugsweise vollständig geschlossen, also fest mit der Ausgangswelle gekoppelt. Es wird deutlich, dass die Brennkraftmaschine während des unbefeuerten Startens deutlich länger mit der Ausgangswelle gekoppelt ist als dies während der Adaptionsbetriebsart bei dem Starten der Brennkraftmaschine der Fall ist. Daher eignet sich auch das unbefeuerte Starten in der Normalbetriebsart zum Durchführen der Kupplungsadaption. Vorzugsweise wird in der Normalbetriebsart die Kupplungsadaption während des unbefeuerten Startens vorgenommen. Es kann jedoch auch vorgesehen sein, dass die Kupplungsadaption in der Normalbetriebsart unterbleibt.

Erfindungsgemäß ist es vorgesehen, dass die Brennkraftmaschine in der Normalbetriebsart zum befeuerten Starten über die Schaltkupplung bei freigegebener Kraftstoffeinspritzung bis auf eine Mindestdrehzahl geschleppt wird, die kleiner ist als die zweite Solldrehzahl, und anschließend die Schaltkupplung geöffnet und dann die Brennkraftmaschinebefeuert auf die Synchrondrehzahl gefahren wird. Alternativ zu dem unbefeuerten Starten kann die Brennkraftmaschine in der Normalbetriebsart auch befeuert gestartet werden. Hierzu wird sie über die Schaltkupplung zunächst angeschleppt, nämlich bis auf die Mindestdrehzahl. die kleiner ist als die zweite Solldrehzahl. Vorzugsweise beträgt die Mindestdrehzahl höchstens 50 %, höchstens 40 % oder höchstens 30 % der zweiten Solldrehzahl. Das Anschleppen auf die Mindestdrehzahl kann befeuert oder unbefeuert erfolgen.

Ab dem Erreichen der zweiten Solldrehzahl wird die Kraftstoffeinspritzung freigegeben, also mithin die Brennkraftmaschine befeuert betrieben, sowie das Anschleppen beendet. Ist die Mindestdrehzahl erreicht, wird die Schaltkupplung geöffnet und die Brennkraftmaschine weiter befeuert betrieben, bis sie die Synchrondrehzahl erreicht hat. Das befeuerte Starten der Brennkraftmaschine erfolgt äußerst rasch, sodass die Brennkraftmaschine sehr schnell auf die Synchrondrehzahl gebracht werden kann. Bei dem befeuerten Starten kann die Kupplungsadaption nicht durchgeführt werden, weil der Drehzahlgradient der Brennkraftmaschine nicht nur von dem Istkupplungsdrehmoment abhängt, sondern zusätzlich von dem von der Brennkraftmaschine erzeugten Drehmoment.

Schließlich kann im Rahmen einer weiteren Ausgestaltung der Erfindung vorgesehen sein, dass nach dem Erreichen der Synchrondrehzahl durch die Brennkraftmaschine die Schaltkupplung vollständig geschlossen wird. Dies kann sowohl in der Normalbetriebsart für das unbefeuerte Starten und das befeuerte Starten als auch in der Adaptionsbetriebsart vorgesehen sein. Durch das vollständige Schließen der Schaltkupplung wird die Brennkraftmaschine im Wesentlichen starr mit der Ausgangswelle verbunden. Dabei liegt kein Kupplungsschlupf vor.

Die Erfindung betrifft weiterhin eine Antriebseinrichtung, insbesondere zur Durchführung des Verfahrens gemäß den vorstehenden Ausführungen, wobei die Antriebseinrichtung eine Brennkraftmaschine und eine elektrische Maschine aufweist, und eine Ausgangswelle der Antriebseinrichtung mit der Brennkraftmaschine über eine Schaltkupplung wirkverbindbar und mit der elektrischen Maschine permanent wirkverbunden ist, sodass die Ausgangswelle in einem ersten Schaltzustand der Schaltkupplung von der Brennkraftmaschine entkoppelt und in einem zweiten Schaltzustand mit ihr gekoppelt ist.

Dabei ist vorgesehen, dass die Antriebseinrichtung dazu ausgebildet ist, während eines Startens der Brennkraftmaschine aus dem Stillstand in einer Adaptionsbetriebsart eine Kupplungsadaption vorzunehmen, wobei an der Schaltkupplung eines Sollkupplungsdrehmoments derart eingestellt wird, dass Kupplungsschlupf vorliegt und die Brennkraftmaschine unbefeuert auf eine erste Solldrehzahl und anschließend unbefeuert mit konstantem Sollkupplungsdrehmoment auf eine zweite Solldrehzahl geschleppt wird, und wobei nach der Kupplungsadaption die Schaltkupplung vollständig geöffnet und die Brennkraftmaschine befeuert auf eine Synchrondrehzahl gefahren wird, die der Istdrehzahl der Ausgangswelle entspricht.

Auf die Vorteile einer derartigen Vorgehensweise beziehungsweise einer derartigen Ausgestaltung der Antriebseinrichtung wurde bereits eingegangen. Sowohl die Antriebseinrichtung als auch das Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung, die eine Brennkraftmaschine und eine elektrische Maschine aufweist, sowie
- Figur 2: zwei Diagramme, in welchem ein Drehmomentverlauf und ein Drehzahlverlauf für ein Starten der Brennkraftmaschine in einer Adaptionsbetriebsart dargestellt sind.

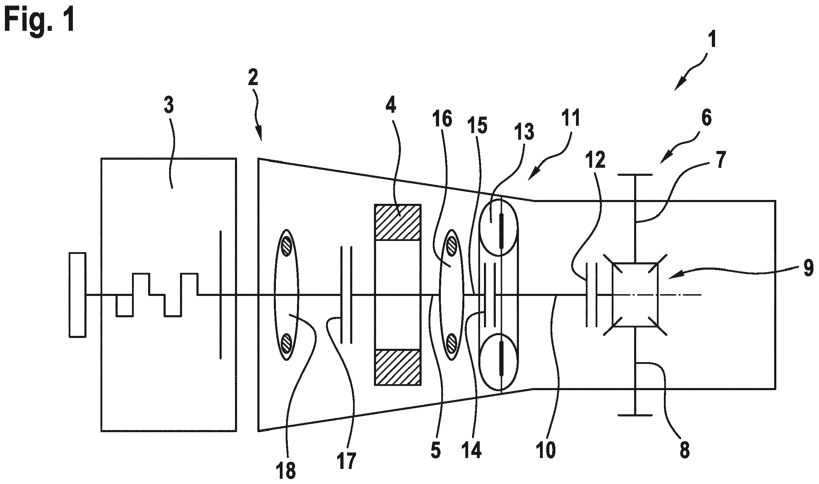

Die Figur 1 zeigt einen Teil eines Antriebsstrangs 1 eines nicht weiter dargestellten Kraftfahrzeugs. Der Antriebsstrang 1 verfügt über eine Antriebseinrichtung 2, die wiederum eine Brennkraftmaschine 3, eine elektrische Maschine 4 und eine Ausgangswelle 5 aufweist. Die Antriebseinrichtung 2 dient dem Antreiben wenigstens einer Achse 6 des Kraftfahrzeugs, welche sich aus zwei Teilachsen 7 und 8 zusammensetzt, die über ein Differentialgetriebe 9 an eine Getriebeausgangswelle 10 eines Mehrganggetriebes 11 angeschlossen ist. Zwischen der Getriebeausgangswelle 10 und dem Differentialgetriebe 9 kann eine optionale Schaltkupplung 12 vorliegen.

Dem Mehrganggetriebe 11 ist ein Drehmomentwandler 13 zugeordnet, welcher über eine Wandlerüberbrückungskupplung 14 verfügen kann. Das Mehrganggetriebe 11 verfügt über eine Getriebeeingangswelle 15, welche vorzugsweise permanent mit dem Drehmomentwandler 13 gekoppelt ist. Die Getriebeeingangswelle 15 kann unmittelbar oder - wie hier dargestellt - über eine Dämpfungseinrichtung 16, beispielsweise ein Torsionsschwingungsdämpfer, mit der Ausgangswelle 5 der Antriebseinrichtung 2 gekoppelt sein, insbesondere starr und/oder permanent.

Die elektrische Maschine 4 ist koaxial zu der Ausgangswelle 5 angeordnet und bevorzugt starr und/oder permanent mit dieser verbunden. Eine Wirkverbindung zwischen der Brennkraftmaschine 3 und der Ausgangswelle 5 ist hingegen einer Schaltkupplung 17 einstellbar. Beispielsweise ist die Brennkraftmaschine 3 in einem ersten Schaltzustand der Schaltkupplung 17 von der Ausgangswelle 5 und mithin von der elektrischen Maschine 4 vollständig entkoppelt. Dagegen ist die Brennkraftmaschine 3 in einem zweiten Schaltzustand der Schaltkupplung 17 mit der Ausgangswelle 5 beziehungsweise der elektrischen Maschine 4 gekoppelt. Die Schaltkupplung 17 kann entweder unmittelbar oder mittelbar über eine weitere Dämpfungseinrichtung 18 an die Brennkraftmaschine 3 angeschlossen sein. Die Dämpfungseinrichtung 18 ist vorzugsweise als Zweimassenschwungrad ausgeführt.

Die Antriebseinrichtung 2 kann grundsätzlich in unterschiedlichen Betriebsarten betrieben werden, insbesondere in einer Normalbetriebsart und einer Adaptionsbetriebsart. In der Normalbetriebsart kann die Brennkraftmaschine 3, beispielsweise aus dem Stillstand, mithilfe unterschiedlicher Startbetriebsarten gestartet werden, nämlich wahlweise unbefeuert oder befeuert. Bei einem unbefeuerten Starten der Brennkraftmaschine 3 wird zunächst die Schaltkupplung 17 teilweise geschlossen, sodass Kupplungsschlupf an der Schaltkupplung 17 vorliegt. Hierzu wird ein entsprechendes Sollkupplungsdrehmoment an der Schaltkupplung 17 eingestellt. Das über die Schaltkupplung 17 von der Ausgangswelle 5 beziehungsweise der elektrischen Maschine 4 übertragene Istkupplungsdrehmoment dient dem Anschleppen der Brennkraftmaschine 3 in Richtung einer Synchrondrehzahl.

Während des unbefeuerten Startens wird nun die Brennkraftmaschine 3 unbefeuert bis auf diese Synchrondrehzahl geschleppt und erst anschließend eine Kraftstoffeinspritzung der Brennkraftmaschine 3 freigegeben. An der Schaltkupplung 17 wird solange das Sollkupplungsdrehmoment eingestellt, bis die Brennkraftmaschine 3 die Synchrondrehzahl erreicht hat. Ist dies der Fall, kann die Schaltkupplung 17 vollständig geschlossen werden. Die Schaltkupplung 17 ist also während des unbefeuerten Startens der Brennkraftmaschine 3 stets zumindest teilweise geschlossen, sodass über sie ein Istkupplungsdrehmoment übertragen wird, welches größer als Null ist.

Alternativ kann ein befeuertes Starten der Brennkraftmaschine 3 vorgesehen sein. Hierzu wird ebenfalls die Schaltkupplung 17 zumindest teilweise geschlossen, indem ein Sollkupplungsdrehmoment an ihr eingestellt wird. Dieses ist wiederum derart gewählt, dass Kupplungsschlupf auftritt. Mithilfe des über die Schaltkupplung 17 übertragenen Istdrehmoments wird die Brennkraftmaschine 3 unbefeuert bis auf eine Mindestdrehzahl angeschleppt. Hat die Brennkraftmaschine 3 die Mindestdrehzahl erreicht, so wird die Schaltkupplung 17 geöffnet und die Brennkraftmaschine 3 bei freigegebener Kraftstoffeinspritzung befeuert betrieben und in Richtung der Synchrondrehzahl beschleunigt. Die Mindestdrehzahl ist geringer als die Synchrondrehzahl und/oder die zweite Solldrehzahl. Beispielsweise entspricht sie derjenigen minimalen Drehzahl, ab welcher die Brennkraftmaschine 3 selbsttätig beschleunigen kann, sofern sie befeuert betrieben wird.

Von Zeit zu Zeit kann es notwendig sein, eine Kupplungsadaption vorzunehmen, während welcher ein Kupplungskennfeld der Schaltkupplung 17 angepasst beziehungsweise korrigiert wird. Hierzu wird aus der Normalbetriebsart in die Adaptionsbetriebsart gewechselt. Soll in der Adaptionsbetriebsart die Brennkraftmaschine 3 gestartet werden, so wird während des Startens die Kupplungsadaption vorgenommen. Zum Starten der Brennkraftmaschine 3 in der Adaptionsbetriebsart wird an der Schaltkupplung 17 das Sollkupplungsdrehmoment derart eingestellt, dass Kupplungsschlupf vorliegt. Mithilfe des über die Schaltkupplung 17 übertragenen Istkupplungsdrehmoments wird die Brennkraftmaschine 3 unbefeuert auf eine erste Solldrehzahl und anschließend unbefeuert mit konstanten Sollkupplungsdrehmoment auf eine zweite Solldrehzahl geschleppt. Die zweite Solldrehzahl kann der vorstehend erwähnten Mindestdrehzahl entsprechen.

Während des Schleppens von der ersten Solldrehzahl auf die zweite Solldrehzahl wird die Kupplungsadaption vorgenommen. Nach dem Erreichen der zweiten Solldrehzahl durch die Brennkraftmaschine 3, also nach Abschluss der Kupplungsadaption, wird die Schaltkupplung 17 vollständig geöffnet und die Brennkraftmaschine 3 befeuert auf die Synchrondrehzahl gefahren. Diese entspricht der Istdrehzahl der Ausgangswelle 5. Trotz des Durchführens der Kupplungsadaption ist auf diese Art und Weise ein deutlich rascheres Starten der Brennkraftmaschine 3 möglich als mittels des unbefeuerten Startens in der Normalbetriebsart. Zudem liegt eine wesentlich geringere Kupplungsbelastung vor.

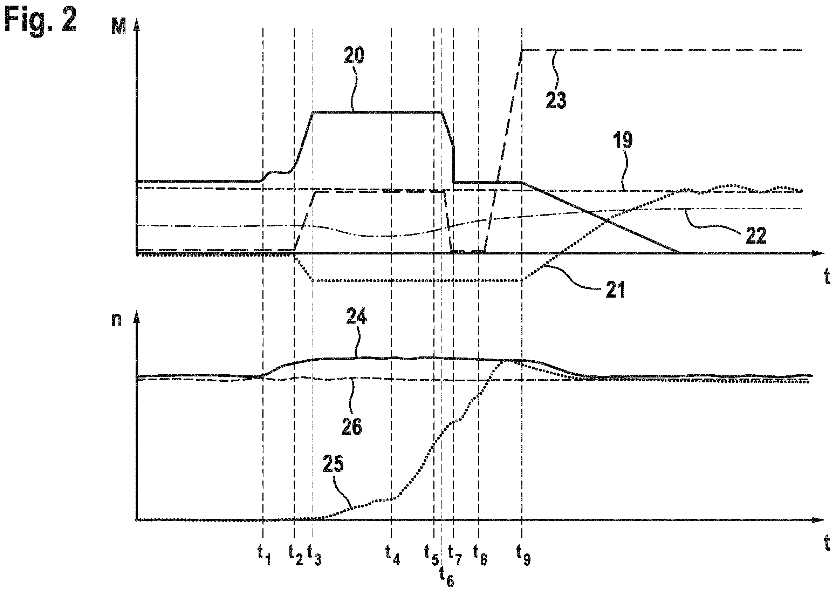

Die Figur 2 zeigt zwei Diagramme, wobei das obere Diagramm Drehmomentverläufe eines Drehmoments M über der Zeit t und das untere Diagramm Drehzahlverläufe einer Drehzahl n über der Zeit t wiedergibt. Ein Verlauf 19 beschreibt ein Vorgabedrehmoment, welches von einem Fahrer des Kraftfahrzeugs vorgegeben wird. Dieses Vorgabedrehmoment wird zunächst allein von der elektrischen Maschine 4 bereitgestellt, deren Drehmomentverlauf über der Zeit von dem Verlauf 20 dargestellt ist. Die Brennkraftmaschine 3 ist hierbei außer Betrieb; sie stellt also zunächst kein Drehmoment zur Verfügung. Der Drehmomentverlauf der Brennkraftmaschine 3 wird durch den Verlauf 21 angegeben. Ein Reibmoment der Brennkraftmaschine bei der jeweils vorliegenden Istdrehzahl der Brennkraftmaschine 3 ist durch den Verlauf 22 angedeutet. Schließlich zeigt ein Verlauf 23 den Verlauf eines Istkupplungsdrehmoments der Schaltkupplung 17. Ein Verlauf 24 beschreibt den Drehzahlverlauf der elektrischen Maschine 4, ein Verlauf 25 den Drehzahlverlauf der Brennkraftmaschine 3 und ein Verlauf 26 den Drehzahlverlauf der Ausgangswelle 5 beziehungsweise der Getriebeeingangswelle 15.

Es ist erkennbar, dass das von der elektrischen Maschine 4 bereitgestellte Drehmoment zunächst dem Vorgabedrehmoment entspricht. Dies ist für t < t₁ der Fall. Die Brennkraftmaschine 3 ist außer Betrieb, sodass ihre Drehzahl gleich Null ist. Soll die Brennkraftmaschine 3 in der Adaptionsbetriebsart gestartet werden, so wird zunächst für t₁ ≤ t < t₂ das von der elektrischen Maschine 4 bereitgestellte Drehmoment und mithin ihre Drehzahl erhöht. Anschließend wird ein erstes Sollkupplungsdrehmoment an der Schaltkupplung 17 eingestellt, welches größer als Null ist. Das bedeutet, dass über die Schaltkupplung 17 das Istkupplungsdrehmoment, welches vorzugsweise gleich dem Sollkupplungsdrehmoment ist, auf die Brennkraftmaschine 3 aufgeprägt wird. Entsprechend beginnt sich die Drehzahl ab t = t₂ zu erhöhen.

Nach dem Einstellen des Sollkupplungsdrehmoments an der Schaltkupplung 17 zum Zeitpunkt t = t₂ nimmt das Istkupplungsdrehmoment während des Zeitraums t₂ ≤ t < t₃ kontinuierlich zu. Entsprechend beginnt sich auch die Drehzahlzunahme der Brennkraftmaschine 3 zu beschleunigen. Auch das von der elektrischen Maschine 4 bereitgestellte Drehmoment kann weiter erhöht werden, insbesondere bis auf ein Drehmoment, welches der Summe des Vorgabedrehmoments und des Sollkupplungsdrehmoments entspricht. Zudem kann in dem Drehmoment ein Drehzahlregleranteil enthalten sein, um den Schlupf zwischen der elektrischen Maschine 4 und der Getriebeeingangswelle 15 aufrecht zu erhalten. Dies ist relevant für etwaige Momentenfehler der Schaltkupplung 17 oder Timingprobleme zwischen der elektrischen Maschine 4 und der Schaltkupplung 17. Die Brennkraftmaschine 3 wird nun angeschleppt, bis sie eine erste Solldrehzahl erreicht hat. Dies ist zum Zeitpunkt t = t₄ der Fall.

Nachfolgend ergibt sich ein nahezu linearer Anstieg der Drehzahl der Brennkraftmaschine 3, bis eine zweite Solldrehzahl erreicht ist. Dies ist zum Zeitpunkt t = t₅ der Fall. Während des Zeitraums t₄ ≤ t < t₅ wird die Kupplungsadaption der Schaltkupplung 17 vorgenommen. Nach dem Erreichen der zweiten Solldrehzahl wird die Schaltkupplung 17 vollständig geöffnet und die Brennkraftmaschine 3 befeuert weiter beschleunigt. Das Öffnen der Schaltkupplung 17 beginnt beispielsweise zum Zeitpunkt t = t₆ und ist zum Zeitpunkt t = t₇ abgeschlossen. Es ist erkennbar, dass die Drehzahl der Brennkraftmaschine 3 in dem Zeitraum t₈ ≤ t < t₉ die Drehzahl der elektrischen Maschine 4 erreicht und sich nachfolgend dieser angleicht. Entsprechend wird beginnend ab dem Zeitpunkt t = t₈ begonnen, die Schaltkupplung 17 zu schließen. Der geschlossene Zustand der Schaltkupplung 17 ist im Zeitpunkt t = t₉ erreicht. Dabei wird ein Sollkupplungsdrehmoment eingestellt, welches größer ist als das zuvor zum Starten der Brennkraftmaschine 3 verwendete Sollkupplungsdrehmoment.

Mithilfe der beschriebenen Vorgehensweise ist sowohl ein schnelles Starten der Brennkraftmaschine 3 mithilfe der elektrischen Maschine 4 als auch das Durchführen der Kupplungsadaption ohne weiteres möglich. Zudem wird die Kupplungsadaption allein in der Adaptionsbetriebsart durchgeführt, also nicht für jedes Starten der Brennkraftmaschine 3.

## Patentansprüche

1. Verfahren zum Betreiben einer Antriebseinrichtung (2), die eine Brennkraftmaschine (3) und eine elektrische Maschine (4) aufweist, wobei eine Ausgangswelle (5) der Antriebseinrichtung (2) mit der Brennkraftmaschine (3) über eine Schaltkupplung (17) wirkverbindbar und mit der elektrischen Maschine (4) permanent wirkverbunden ist, sodass die Ausgangswelle (5) in einem ersten Schaltzustand der Schaltkupplung (17) von der Brennkraftmaschine (3) entkoppelt und in einem zweiten Schaltzustand mit ihr gekoppelt ist, wobei während eines Startens der Brennkraftmaschine (3) aus dem Stillstand in einer Adaptionsbetriebsart eine Kupplungsadaption vorgenommen wird, wobei an der Schaltkupplung (17) ein Sollkupplungsdrehmoment derart eingestellt wird, dass Kupplungsschlupf vorliegt und die Brennkraftmaschine (3) unbefeuert auf eine erste Solldrehzahl und anschließend unbefeuert mit konstantem Sollkupplungsdrehmoment auf eine zweite Solldrehzahl geschleppt und bei zwischen der ersten Solldrehzahl und der zweiten Solldrehzahl liegender Istdrehzahl die Kupplungsadaption vorgenommen wird, **dadurch gekennzeichnet, dass** nach der Kupplungsadaption die Schaltkupplung (17) vollständig geöffnet und die Brennkraftmaschine (3) bei vollständig geöffneter Schaltkupplung (17) befeuert auf eine Synchrondrehzahl gefahren wird, die der Istdrehzahl der Ausgangswelle (5) entspricht, und dass die Antriebseinrichtung (2) in einer Normalbetriebsart betrieben wird und nur dann in die Adaptionsbetriebsart gewechselt wird, wenn eine bestimmte Anzahl an Kupplungsbetätigungen der Schaltkupplung (17) seit der letzten Kupplungsadaption überschritten ist oder eine Adaptionsanforderung vorliegt, wobei nach dem Starten der Brennkraftmaschine (3), während welchem die Kupplungsadaption durchgeführt wird, wieder in die Normalbetriebsart gewechselt wird, wobei die Brennkraftmaschine (3) in der Normalbetriebsart zum befeuerten Starten über die Schaltkupplung (17) bei freigegebener Kraftstoffeinspritzung bis auf eine Mindestdrehzahl geschleppt wird, die kleiner ist als die zweite Solldrehzahl, und anschließend die Schaltkupplung (17) geöffnet und dann die Brennkraftmaschine (3) befeuert auf die Synchrondrehzahl gefahren wird.

2. Verfahren nach Anspruch 1, **dadurch gekennzeichnet, dass** bei der Kupplungsadaption aus einem Drehzahlgradient der Brennkraftmaschine (3) ein Istkupplungsdrehmoment ermittelt und mit dem Sollkupplungsdrehmoment verglichen wird, wobei bei einer Abweichung zwischen dem Istkupplungsdrehmoment und dem Sollkupplungsdrehmoment eine Adaption eines Kupplungskennfelds der Schaltkupplung (17) vorgenommen wird.

3. Verfahren nach einem der vorhergehenden Ansprüche, **dadurch gekennzeichnet, dass** vor dem Erreichen der zweiten Solldrehzahl durch die Brennkraftmaschine (3) eine Kraftstoffeinspritzung in die Brennkraftmaschine (3) unterbunden und nach dem Erreichen der zweiten Solldrehzahl freigegeben wird.

4. Verfahren nach einem der vorhergehenden Ansprüche, **dadurch gekennzeichnet, dass** ein linearer Drehzahlverlauf zwischen der ersten Solldrehzahl und der zweiten Solldrehzahl zum Bestimmen des Istkupplungsdrehmoments verwendet wird.

5. Verfahren nach einem der vorhergehenden Ansprüche, **dadurch gekennzeichnet, dass** nach dem Erreichen der Synchrondrehzahl durch die Brennkraftmaschine (3) die Schaltkupplung (17) vollständig geschlossen wird.

6. Antriebseinrichtung (2), insbesondere zur Durchführung des Verfahrens nach einem oder mehreren der vorhergehenden Ansprüche, wobei die Antriebseinrichtung (2) eine Brennkraftmaschine (3) und eine elektrische Maschine (4) aufweist und eine Ausgangswelle (5) der Antriebseinrichtung (2) mit der Brennkraftmaschine (3) über eine Schaltkupplung (17) wirkverbindbar und mit der elektrischen Maschine (4) permanent wirkverbunden ist, sodass die Ausgangswelle (5) in einem ersten Schaltzustand der Schaltkupplung (17) von der Brennkraftmaschine (3) entkoppelt und in einem zweiten Schaltzustand mit ihr gekoppelt ist, wobei die Antriebseinrichtung (2) dazu ausgebildet ist, während eines Startens der Brennkraftmaschine (3) aus dem Stillstand in einer Adaptionsbetriebsart eine Kupplungsadaption vorzunehmen, wobei an der Schaltkupplung (17) ein Sollkupplungsdrehmoment derart eingestellt wird, dass Kupplungsschlupf vorliegt, und die Brennkraftmaschine (3) unbefeuert auf eine erste Solldrehzahl und anschließend unbefeuert mit konstantem Sollkupplungsdrehmoment auf eine zweite Solldrehzahl geschleppt und bei zwischen der ersten Solldrehzahl und der zweiten Solldrehzahl liegender Istdrehzahl die Kupplungsadaption vorgenommen wird, **dadurch gekennzeichnet, dass** nach der Kupplungsadaption die Schaltkupplung (17) vollständig geöffnet und die Brennkraftmaschine (3) befeuert auf eine Synchrondrehzahl gefahren wird, die der Istdrehzahl der Ausgangswelle (5) entspricht, und dass die Antriebseinrichtung (2) in einer Normalbetriebsart betrieben wird und nur dann in die Adaptionsbetriebsart gewechselt wird, wenn eine bestimmte Anzahl an Kupplungsbetätigungen der Schaltkupplung (17) seit der letzten Kupplungsadaption überschritten ist oder eine Adaptionsanforderung vorliegt, wobei nach dem Starten der Brennkraftmaschine (3), während welchem die Kupplungsadaption durchgeführt wird, wieder in die Normalbetriebsart gewechselt wird, wobei die Brennkraftmaschine (3) in der Normalbetriebsart zum befeuerten Starten über die Schaltkupplung (17) bei freigegebener Kraftstoffeinspritzung bis auf eine Mindestdrehzahl geschleppt wird, die kleiner ist als die zweite Solldrehzahl, und anschließend die Schaltkupplung (17) geöffnet und dann die Brennkraftmaschine (3) befeuert auf die Synchrondrehzahl gefahren wird.

## Claims

1. Method for operating a drive device (2) comprising an internal combustion engine (3) and an electric engine (4), wherein an output shaft (5) of the drive device (2) can be operatively connected to the internal combustion engine (3) by way of a shifting clutch (17) and is permanently operatively connected to the electric engine (4), so that the output shaft (5) is disengaged from the internal combustion engine (3) in a first shifting state of the shifting clutch (17) and is engaged with it in a second shifting state, wherein, during a starting of the internal combustion engine (3) from a standstill, a clutch adaptation is carried out in an adaptation operating mode, wherein a target clutch torque is adjusted on the shifting clutch (17) in such a way that clutch slip is present and the internal combustion engine (3) is towed without firing to a first target rotational speed and subsequently towed without firing with a constant target clutch torque to a second target rotational speed and the clutch adaptation is carried out at an actual rotational speed lying between the first target rotational speed and the second target rotational speed, **characterised in that,** after the clutch adaptation, the shifting clutch (17) is opened completely and, with completely opened shifting clutch (17), the internal combustion engine (3) is operated with firing to a synchronous rotational speed, which corresponds to the actual rotational speed of the output shaft (5), and that the drive device (2) is operated in a normal operating mode and is only switched into the adaptation operating mode, when a certain number of clutch actuations of the shifting clutch (17) since the last clutch adaptation is exceeded or an adaptation request is present, wherein after the starting of the internal combustion engine (3), during which the clutch adaptation is carried out, there is a switch back to the normal operating mode, wherein the internal combustion engine (3) is towed in the normal operating mode for fired starting by way of the shifting clutch (17) with released fuel injection, until a minimum rotational speed is reached, which is less than the second target rotational speed, and subsequently the shifting clutch (17) is opened and then the internal combustion engine (3) is operated with firing to the synchronous rotational speed.

2. Method according to claim 1, **characterised in that,** with the clutch adaptation, an actual clutch torque is determined from a rotational speed gradient of the internal combustion engine (3) and compared with the target clutch torque, wherein, in the event of a deviation between the actual clutch torque and the target clutch torque, an adaptation of a clutch characteristic map of the shifting clutch (17) is carried out.

3. Method according to any one of the preceding claims, **characterised in that,** before the second target rotational speed is reached by the internal combustion engine (3), fuel injection into the internal combustion engine (3) is suppressed and the same is released after the second target rotational speed is reached.

4. Method according to any one of the preceding claims, **characterised in that** a linear rotational speed curve is used between the first target rotational speed and the second target rotational speed, to determine the actual clutch torque.

5. Method according to any one of the preceding claims, **characterised in that,** after the synchronous rotational speed is reached by the internal combustion engine (3), the shifting clutch (17) is closed completely.

6. Drive device (2), in particular to carry out the method according to one or more of the preceding claims, wherein the drive device (2) comprises an internal combustion engine (3) and an electric engine (4), and an output shaft (5) of the drive device (2) can be operatively connected to the internal combustion engine (3) by way of a shifting clutch (17) and is permanently operatively connected to the electric engine (4), so that the output shaft (5) is disengaged from the internal combustion engine (3) in a first shifting state of the shifting clutch (17) and is engaged with it in a second shifting state, wherein the drive device (2) is configured to carry out a clutch adaptation during a starting of the internal combustion engine (3) from a standstill in an adaptation operating mode, wherein a target clutch torque is adjusted on the shifting clutch (17) in such a way that clutch slip is present and the internal combustion engine (3) is towed without firing to a first target rotational speed and subsequently towed without firing with a constant target clutch torque to a second target rotational speed and the clutch adaptation is carried out at an actual rotational speed lying between the first target rotational speed and the second target rotational speed, **characterised in that,** after the clutch adaptation, the shifting clutch (17) is opened completely and the internal combustion engine (3) is operated with firing to a synchronous rotational speed, which corresponds to the actual rotational speed of the output shaft (5), and that the drive device (2) is operated in a normal operating mode and is only switched into the adaptation operating mode, when a certain number of clutch actuations of the shifting clutch (17) since the last clutch adaptation is exceeded or an adaptation request is present, wherein after the starting of the internal combustion engine (3), during which the clutch adaptation is carried out, there is a switch back to the normal operating mode, wherein the internal combustion engine (3) is towed in the normal operating mode for fired starting by way of the shifting clutch (17) with released fuel injection, until a minimum rotational speed is reached, which is less than the second target rotational speed, and subsequently the shifting clutch (17) is opened and then the internal combustion engine (3) is operated with firing to the synchronous rotational speed.

## Revendications

1. Procédé de fonctionnement d'un dispositif de propulsion (2), qui présente un moteur à combustion interne (3) et un moteur électrique (4), dans lequel un arbre de sortie (5) du dispositif de propulsion (2) peut être en liaison active avec le moteur à combustion interne (3) par le biais d'un embrayage (17) et est en liaison active permanente avec le moteur électrique (4), de sorte que l'arbre de sortie (5) est découplé du moteur à combustion interne (3) dans un premier état de commutation de l'embrayage (17) et couplé avec celui-ci dans un deuxième état de commutation, dans lequel une adaptation d'embrayage est effectuée pendant un démarrage du moteur à combustion interne (3) de l'arrêt à un mode de fonctionnement d'adaptation, dans lequel un couple d'embrayage de consigne est réglé au niveau de l'embrayage (17) de sorte qu'il y a patinage d'embrayage et le moteur à combustion interne (3) est remorqué non alimenté à une première vitesse de rotation de consigne et ensuite non alimenté avec couple d'embrayage de consigne constant à une deuxième vitesse de rotation de consigne et l'adaptation d'embrayage est effectuée à la vitesse de rotation réelle située entre la première vitesse de rotation de consigne et la deuxième vitesse de rotation de consigne, **caractérisé en ce qu'**après l'adaptation d'embrayage, l'embrayage (17) est entièrement ouvert et le moteur à combustion interne (3) est amené alimenté à une vitesse de rotation synchrone lorsque l'embrayage (17) est entièrement ouvert, qui correspond à la vitesse de rotation réelle de l'arbre de sortie (5), et que le dispositif de propulsion (2) fonctionne dans un mode de fonctionnement normal et ne passe au mode de fonctionnement d'adaptation que lorsqu'un nombre déterminé d'actionnements d'embrayage de l'embrayage (17) est dépassé depuis la dernière adaptation d'embrayage ou lorsqu'il y a une exigence d'adaptation, dans lequel après le démarrage du moteur à combustion interne (3), pendant lequel l'adaptation d'embrayage est réalisée, il est à nouveau passé au mode de fonctionnement normal, dans lequel le moteur à combustion interne (3) est remorqué dans le mode de fonctionnement normal pour le démarrage alimenté par le biais de l'embrayage (17) lorsque l'injection de carburant est libérée jusqu'à une vitesse de rotation minimum, qui est inférieure à la deuxième vitesse de rotation de consigne, et ensuite l'embrayage (17) est ouvert puis le moteur à combustion interne (3) est amené alimenté à la vitesse de rotation synchrone.

2. Procédé selon la revendication 1, **caractérisé en ce que** lors de l'adaptation d'embrayage, un couple d'embrayage réel est déterminé à partir d'un gradient de vitesse de rotation du moteur à combustion interne (3) et comparé avec le couple d'embrayage de consigne, dans lequel en cas de divergence entre le couple d'embrayage réel et le couple d'embrayage de consigne une adaptation d'un diagramme caractéristique d'embrayage de l'embrayage (17) est effectuée.

3. Procédé selon l'une quelconque des revendications précédentes, **caractérisé en ce qu'**avant que le moteur à combustion interne (3) n'atteigne la deuxième vitesse de rotation de consigne, une injection de carburant dans le moteur à combustion interne (3) est empêchée et après que la deuxième vitesse de rotation de consigne est atteinte, est libérée.

4. Procédé selon l'une quelconque des revendications précédentes, **caractérisé en ce qu'**une allure de vitesse de rotation linéaire est utilisée entre la première vitesse de rotation de consigne et la deuxième vitesse de rotation de consigne pour la détermination du couple d'embrayage réel.

5. Procédé selon l'une quelconque des revendications précédentes, **caractérisé en ce qu'**après que le moteur à combustion interne (3) a atteint la vitesse de rotation linéaire synchrone, l'embrayage (17) est entièrement fermé.

6. Dispositif de propulsion (2), en particulier pour la réalisation du procédé selon une ou plusieurs des revendications précédentes, dans lequel le dispositif de propulsion (2) présente un moteur à combustion interne (3) et un moteur électrique (4) et un arbre de sortie (5) du dispositif de propulsion (2) peut être en liaison active avec le moteur à combustion interne (3) par le biais d'un embrayage (17) et est en liaison active permanente avec le moteur électrique (4), de sorte que l'arbre de sortie (5) est découplé du moteur à combustion interne (3) dans un premier état de commutation de l'embrayage (17) et couplé avec celui-ci dans un deuxième état de commutation, dans lequel le dispositif de propulsion (2) est configuré pour effectuer une adaptation d'embrayage pendant un démarrage du moteur à combustion interne (3) de l'arrêt à un mode de fonctionnement d'adaptation, dans lequel un couple d'embrayage de consigne est réglé au niveau de l'embrayage (17) de sorte qu'il y a patinage d'embrayage, et le moteur à combustion interne (3) est remorqué non alimenté à une première vitesse de rotation de consigne et ensuite non alimenté avec couple d'embrayage de consigne constant à une deuxième vitesse de rotation de consigne et l'adaptation d'embrayage est effectuée à la vitesse de rotation réelle située entre la première vitesse de rotation de consigne et la deuxième vitesse de rotation de consigne, **caractérisé en ce qu'**après l'adaptation d'embrayage, l'embrayage (17) est entièrement ouvert et le moteur à combustion interne (3) est amené alimenté à une vitesse de rotation synchrone, qui correspond à la vitesse de rotation réelle de l'arbre de sortie (5), et que le dispositif de propulsion (2) fonctionne dans un mode de fonctionnement normal et ne passe au mode de fonctionnement d'adaptation que lorsqu'un nombre déterminé d'actionnements d'embrayage de l'embrayage (17) est dépassé depuis la dernière adaptation d'embrayage ou lorsqu'il y a une exigence d'adaptation, dans lequel après le démarrage du moteur à combustion interne (3), pendant lequel l'adaptation d'embrayage est réalisée, il est à nouveau passé au mode de fonctionnement normal, dans lequel le moteur à combustion interne (3) est remorqué dans le mode de fonctionnement normal pour le démarrage alimenté par le biais de l'embrayage (17) lorsque l'injection de carburant est libérée jusqu'à une vitesse de rotation minimum, qui est inférieure à la deuxième vitesse de rotation de consigne, et ensuite l'embrayage (17) est ouvert puis le moteur à combustion interne (3) est amené alimenté à la vitesse de rotation synchrone.
